# FASCICULE DE BREVET EUROPEEN

(11) **EP 3 204 654 B1**
(45) Date de publication et mention de la délivrance du brevet: **12.12.2018**
(21) Numéro de dépôt: 15787259.9
(22) Date de dépôt: 09.10.2015
(51) Int. Cl.: F16B 5/02, F16B 43/00

(54) **ASSEMBLAGE DE DEUX PIÈCES COMPRENANT UNE COUPELLE DE CENTRAGE AMOVIBLE POUR TURBOMACHINE D'AÉRONEF**
ZUSAMMENBAU VON ZWEI TEILEN MIT ABNEHMBAREM ZENTRIERSITZ FÜR EIN FLUGZEUGTURBINENTRIEBWERK
ASSEMBLY OF TWO PARTS COMPRISING A REMOVABLE CENTERING SEAT FOR AN AIRCRAFT TURBINE ENGINE

(30) Priorité: 10.10.2014 FR 1459754
(43) Date de publication de la demande: 16.08.2017
(73) Titulaire: Safran Aircraft Engines, 75015 Paris (FR)
(72) Inventeur: MATHIAS, Cyrille François Antoine, F-77550 Moissy Cramayel Cedex (FR); VITRA, Julien, F-77550 Moissy Cramayel Cedex (FR); SIMONOTTI, Hervé, F-94350 Villiers Sur Marne (FR)
(74) Mandataire: Brevalex
(86) Numéro de dépôt international: PCT/FR2015/052722
(87) Numéro de publication internationale: WO 2016/055747

(56) Documents cités:
- EP-A1- 2 653 376
- DE-C1- 4 310 002
- FR-A1- 2 968 039
- US-A- 2 640 244
- US-A- 2 853 112
- US-A- 3 614 799

## Description

### DOMAINE TECHNIQUE

La présente invention se rapporte au domaine des machines telles que les turbomachines d'aéronef, et concerne plus particulièrement l'assemblage de deux pièces destinées à faire partie d'une telle machine.

### ÉTAT DE LA TECHNIQUE ANTÉRIEURE

Une turbomachine pour aéronef comporte en général des pièces en forme de parois relativement minces sur lesquelles d'autres pièces sont fixées au moyen de vis, de rivets, ou de moyens de fixation analogues à tête fraisée.

Ces pièces relativement minces sont par exemple les secteurs montés bout-à-bout circonférentiellement pour former une virole extérieure d'un moyeu de carter intermédiaire, délimitant intérieurement le canal de flux secondaire de la turbomachine, et/ou une virole intérieure d'un tel moyeu de carter intermédiaire, délimitant extérieurement le canal de flux primaire de la turbomachine. Des composants logés dans un espace défini entre les deux viroles précitées sont en effet fixés sur l'une ou l'autre des viroles. Les composants fixés sur ces pièces relativement minces sont par exemple des conduits d'acheminement d'air ou d'huile. De plus, les parois relativement minces sont en général elles-mêmes fixées sur des carters, également au moyen de moyens de fixation du type décrit ci-dessus.

D'une manière générale, ces parois relativement minces ne permettent pas de loger les têtes fraisées des moyens de fixation dans l'épaisseur de ces parois. Par conséquent, afin d'accueillir la tête de chaque moyen de fixation, une telle pièce en forme de paroi relativement mince est pourvue de bossages.

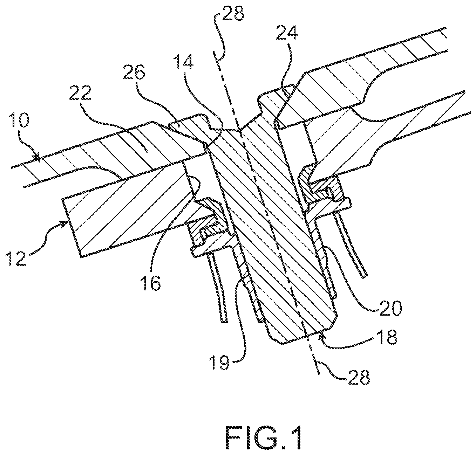

La figure 1 illustre schématiquement une première pièce 10, relativement mince, telle qu'un secteur de virole du type décrit ci-dessus, sur laquelle une deuxième pièce 12 est fixée d'une manière connue.

A cet effet, les deux pièces 10 et 12 sont pourvues respectivement d'un premier orifice traversant 14 et d'un deuxième orifice traversant 16 positionnés l'un en regard de l'autre, et au travers desquels s'étend une vis 18 comprenant un corps 19 fileté vissé dans des moyens taraudés 20 fixés sur la deuxième pièce 12 ou intégrés à cette dernière.

La première pièce 10 est pourvue d'un bossage 22 dans lequel est formé un logement 24 pour la tête 26 de la vis. Un tel bossage permet ainsi d'éviter que la tête 26 de la vis ne fasse saillie vers l'extérieur de la première pièce 10.

Toutefois, la réalisation de tels bossages requiert un recours à des techniques d'usinage complexes et coûteuses à mettre en oeuvre.

En outre, EP 2 653 376 A1 divulgue un assemblage boulonné d'un revêtement d'aéronef sur une pièce de structure, le revêtement étant suffisamment épais pour loger une coupelle entre la tête du boulon et le revêtement.

### EXPOSÉ DE L'INVENTION

L'invention a notamment pour but d'apporter une solution simple, économique et efficace à ce problème.

Elle propose à cet effet un assemblage, en particulier pour une machine telle qu'une turbomachine d'aéronef, comprenant une première pièce pourvue d'un premier orifice traversant, une deuxième pièce pourvue d'un deuxième orifice traversant positionné en regard du premier orifice traversant de la première pièce, et un moyen de fixation qui s'étend au travers desdits premier et deuxième orifices traversants, et qui présente une tête en forme de tête fraisée exerçant un appui sur la première pièce et un corps coopérant avec la deuxième pièce de sorte que le moyen de fixation assure une fixation de la deuxième pièce sur la première pièce.

Selon l'invention, l'assemblage comprend une coupelle, indépendante des première et deuxième pièces et du moyen de fixation. Cette coupelle est montée dans le premier orifice traversant, et la coupelle comprend :
- un premier axe, défini par rapport à la deuxième pièce, pour le positionnement du moyen de fixation,
- un orifice de coupelle dans lequel est logée la tête du moyen de fixation et au travers duquel s'étend le corps du moyen de fixation,
- une surface d'appui en forme de fraisure, s'étendant dans le premier orifice traversant et dans le deuxième orifice traversant, et sur laquelle la tête du moyen de fixation est appliquée, et
- des moyens de butée coopérant avec un pourtour du premier orifice traversant pour empêcher un déplacement de la coupelle en direction de la deuxième pièce.

L'assemblage présente en outre les caractéristiques suivantes :
- ledit orifice de coupelle définit un deuxième axe,
- la surface d'appui est configurée pour centrer la tête du moyen de fixation par rapport audit deuxième axe,
- la première pièce présente un lamage présentant un fond formant le pourtour du premier orifice traversant, et
- la coupelle comprend une surface latérale externe de forme cylindrique de révolution, montée ajustée dans ledit premier orifice traversant de sorte que lesdits premier et deuxième axes soient confondus.

L'appui de la tête du moyen de fixation sur la première pièce s'exerce ainsi par l'intermédiaire desdits moyens de butée.

L'invention propose donc de loger la tête des moyens de fixation au sein de coupelles indépendantes des pièces à assembler, et donc amovibles. L'invention permet ainsi d'éviter le recours à des techniques d'usinage coûteuses et complexes.

L'invention est applicable à tous types de pièces à assembler mais est particulièrement avantageuse lorsque la première pièce est relativement mince, en particulier dans le cas où il ne serait pas possible de loger la tête d'une vis, d'un rivet ou d'un moyen de fixation analogue, dans l'épaisseur de la première pièce. Ainsi, la surface d'appui s'étend dans le premier orifice traversant et dans le deuxième orifice traversant. Cela permet à la tête du moyen de fixation de ne pas faire saillie au-delà de la première pièce, du côté opposé à la deuxième pièce, tout en s'étendant conjointement dans l'épaisseur des première et deuxième pièces.

La coupelle permet un centrage réciproque du moyen de fixation et de la première pièce par rapport au premier axe. Du fait du montage ajusté de la coupelle dans le premier orifice, l'invention permet ainsi un positionnement relatif optimal de la première pièce par rapport à la deuxième pièce.

Par ailleurs, le moyen de fixation est de préférence une vis, et la deuxième pièce est avantageusement pourvue de moyens taraudés définissant ledit premier axe, ce dernier formant ainsi un axe de vissage pour la vis.

En outre, lesdits moyens de butée prennent avantageusement la forme d'un rebord annulaire s'étendant autour de la coupelle en saillie vers l'extérieur de celle-ci. Le cas échéant, le rebord annulaire s'étend en saillie depuis la surface latérale externe de la coupelle.

De préférence, l'assemblage comporte en outre un dispositif d'arrêt axial coopérant avec la coupelle et avec la première pièce pour retenir la coupelle dans le premier orifice traversant.

Le dispositif d'arrêt axial permet d'empêcher un déplacement de la coupelle dans la direction opposée à la deuxième pièce. Ce dispositif et les moyens de butée précités assurent ainsi conjointement la retenue de la coupelle sur la première pièce. Cela permet de limiter au mieux les risques de perte de la coupelle au cours des opérations d'assemblage des deux pièces.

De préférence, la coupelle comporte une première gorge annulaire, et le dispositif d'arrêt axial comprend un organe de blocage amovible engagé dans ladite première gorge annulaire.

Le dispositif d'arrêt axial peut ainsi être mis en place après le montage de la coupelle dans le premier orifice traversant, tout en étant d'une conception simple.

L'organe de blocage amovible prend de préférence la forme d'un jonc d'arrêt.

Dans un premier mode de réalisation préféré de l'invention, la deuxième pièce présente une surface de contact appliquée contre la première pièce, ledit deuxième orifice traversant comporte une partie élargie débouchant au travers de ladite surface de contact, et une partie de la coupelle s'étend dans ladite partie élargie du deuxième orifice traversant.

Dans un deuxième mode de réalisation préféré de l'invention, l'assemblage comprend en outre une entretoise interposée entre lesdites première et deuxième pièces et entourant une partie de la coupelle.

De préférence, l'entretoise comporte une deuxième gorge annulaire dans laquelle ledit organe de blocage amovible est partiellement engagé, de sorte que l'entretoise et la coupelle se retiennent mutuellement à la première pièce.

L'invention concerne également une machine, en particulier une turbomachine, comprenant au moins un assemblage du type décrit ci-dessus, dans lequel l'une des première et deuxième pièces constitue au moins une partie d'une paroi annulaire délimitant un canal d'écoulement de flux de la machine.

De préférence, l'autre des première et deuxième pièces constitue au moins une partie d'un carter structural de la machine ou une partie d'un conduit pour la circulation d'un fluide.

L'invention concerne enfin un procédé de réalisation d'un assemblage du type décrit ci-dessus, comprenant les étapes consistant à :
- mettre en place la coupelle dans le premier orifice traversant de la première pièce ;
- mettre en place la deuxième pièce, de sorte que le deuxième orifice traversant soit situé en regard du premier orifice traversant ;
- mettre en place le moyen de fixation au travers des premier et deuxième orifices traversants, jusqu'à l'application d'une contrainte de compression entre les première et deuxième pièces et l'obtention du serrage de la première pièce et de la deuxième pièce, du fait d'un appui exercé par la tête du moyen de fixation sur la première pièce et du fait d'une coopération du corps du moyen de fixation avec la deuxième pièce.

De préférence, le procédé comprend en outre une étape consistant à activer un dispositif d'arrêt axial, de sorte que ledit dispositif coopère avec la coupelle et avec la première pièce pour retenir la coupelle dans le premier orifice traversant.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en coupe axiale d'un assemblage de deux pièces d'un type connu ;
- la figure 2 est une vue schématique en coupe axiale d'une turbomachine pour aéronef selon un mode de réalisation préféré de l'invention ;
- la figure 3 est une vue schématique partielle en coupe axiale d'un assemblage de deux pièces selon un premier mode de réalisation préféré de l'invention, destiné à équiper la turbomachine de la figure 2 ;
- la figure 4 est une vue schématique partielle en coupe axiale d'un assemblage de deux pièces selon un deuxième mode de réalisation préféré de l'invention, destiné à équiper la turbomachine de la figure 2 ;
- la figure 4a est une vue à plus grande échelle d'une partie IVa de la figure 4.

Dans l'ensemble de ces figures, des références identiques peuvent désigner des éléments identiques ou analogues.

### EXPOSÉ DÉTAILLÉ DE MODES DE RÉALISATION PRÉFÉRÉS

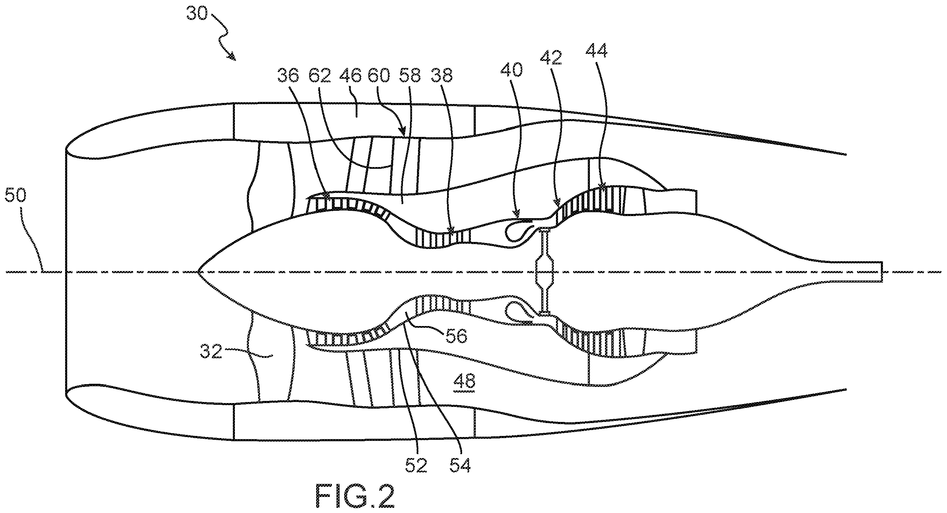

La figure 2 illustre une turbomachine pour aéronef 30, par exemple un turboréacteur à double flux, comportant de manière générale une soufflante 32 destinée à l'aspiration d'un flux d'air se divisant en aval de la soufflante en un flux primaire alimentant un coeur de la turbomachine et un flux secondaire contournant le coeur 34. Ce coeur comporte de manière générale un compresseur basse pression 36, un compresseur haute pression 38, une chambre de combustion 40, une turbine haute pression 42 et une turbine basse pression 44. La turbomachine est carénée par une nacelle 46 entourant l'espace d'écoulement 48 du flux secondaire. Les rotors de la turbomachine sont montés rotatifs autour d'un axe longitudinal 50 de la turbomachine.

La turbomachine 30 comporte en particulier des pièces en forme de parois relativement minces, sur lesquelles d'autres pièces sont fixées au moyen de vis, de rivets, ou de moyens de fixation analogues.

Il s'agit notamment de secteurs montés bout-à-bout circonférentiellement pour former la virole extérieure 52 d'un moyeu de carter intermédiaire, délimitant intérieurement l'espace d'écoulement 48 du flux secondaire, et de secteurs montés bout-à-bout circonférentiellement pour former la virole intérieure 54 d'un tel moyeu de carter intermédiaire, cette virole 54 délimitant extérieurement l'espace d'écoulement 56 du flux primaire. Des composants (non visibles sur la figure 2) logés dans l'espace 58 défini entre les deux viroles 52 et 54 sont fixés sur l'une ou l'autre de ces viroles. De plus, ces viroles sont elles-mêmes fixées sur un carter intermédiaire 60 de la turbomachine, par exemple sur des bras structuraux 62 appartenant à ce carter.

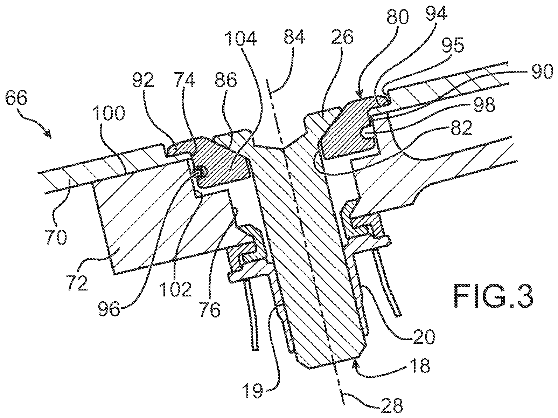

La figure 3 illustre un assemblage 66 selon un premier mode de réalisation préféré de l'invention, comprenant une première pièce 70, qui est par exemple un secteur de la virole extérieure 52, et une deuxième pièce 72, qui est par exemple une paroi d'un conduit d'acheminement d'air ou d'huile. En variante, la deuxième pièce 72 peut notamment être une partie d'un bras structural 62 de carter intermédiaire.

Les deux pièces 70 et 72 sont pourvues, respectivement, d'un premier orifice traversant 74, et d'un deuxième orifice traversant 76 positionné en regard du premier orifice traversant 74.

Un moyen de fixation 18 s'étend au travers des deux orifices traversants 74, 76. Ce moyen de fixation 18 présente une tête 26 en forme de fraisure destinée à exercer un appui sur la première pièce 70 et un corps 19 destiné à coopérer avec la deuxième pièce de sorte que le moyen de fixation 18 assure une fixation de la deuxième pièce sur la première pièce.

Par ailleurs, un premier axe 28 pour le positionnement du moyen de fixation est défini par rapport à la deuxième pièce 72.

Dans l'exemple illustré, le moyen de fixation prend la forme d'une vis 18. La tête 26 précitée forme la tête de la vis tandis que le corps 19 comporte le filetage de la vis. De plus, le premier axe 28 est un axe de vissage défini par des moyens de retenue, tels que des moyens taraudés 20 fixés sur la deuxième pièce 72, dans le prolongement du deuxième orifice traversant 76, d'une manière connue en soi.

L'assemblage 66 comporte en outre une coupelle 80, formant une pièce indépendante des première et deuxième pièces 70, 72 précitées et du moyen de fixation 18. La coupelle 80 présente donc un caractère amovible.

La coupelle 80 présente, par exemple en son centre, un orifice de coupelle 82 dans lequel est logée la tête 26 du moyen de fixation et au travers duquel s'étend le corps 19 du moyen de fixation. La coupelle 80 comporte en outre une surface d'appui 86 délimitant une section d'entrée de l'orifice de coupelle 82 et sur laquelle la tête 26 du moyen de fixation 18 est appliquée. La surface d'appui 86 est en forme de fraisure et s'étend dans le premier orifice traversant 74 et dans le deuxième orifice traversant 76, c'est-à-dire dans une partie au moins de l'épaisseur de chacune des première et deuxième pièces. La tête 26 peut ainsi présenter une étendue axiale supérieure à l'épaisseur de la première pièce 70, tout en étant logée conjointement dans l'épaisseur des deux pièces 70 et 72 de sorte que la tête 26 ne fasse sensiblement pas saillie de la première pièce 70 du côté opposé à la deuxième pièce 72.

L'orifice de coupelle 82 définit un deuxième axe 84, et la surface d'appui 86 est conformée pour centrer le moyen de fixation 18 selon le deuxième axe 84.

La coupelle 80 présente une surface latérale externe 90 montée ajustée dans le premier orifice traversant 74, de sorte que le deuxième axe 84 se confonde avec le premier axe 28. La surface latérale externe 90 et le premier orifice traversant 74 sont de forme cylindrique de révolution.

La coupelle 80 comporte en outre des moyens de butée 92 coopérant avec un pourtour du premier orifice traversant 74 pour empêcher un déplacement de la coupelle 80 en direction de la deuxième pièce 72. L'appui de la tête 26 du moyen de fixation 18 sur la première pièce 70 s'exerce ainsi par l'intermédiaire des moyens de butée 92 de la coupelle.

Dans l'exemple illustré, les moyens de butée prennent la forme d'un rebord annulaire 92, ou d'une collerette, s'étendant autour de l'orifice de coupelle 82, en saillie radialement vers l'extérieur de la coupelle, depuis la surface latérale externe 90. Ce rebord annulaire 92 est appliqué sur le pourtour 94 du premier orifice traversant 74. La première pièce 70 présente un lamage 95 présentant un fond formant le pourtour 94 du premier orifice traversant 74 sur lequel le rebord annulaire 92 est appliqué. Dans l'exemple illustré, le rebord annulaire 92 est intégralement logé dans le lamage 95. En variante, le rebord annulaire 92 peut faire saillie hors du lamage 95, au-delà de la surface de la première pièce 70, sans sortir du cadre de l'invention.

L'assemblage 66 comporte en outre de préférence un dispositif d'arrêt axial comportant un organe de blocage amovible 96 coopérant avec la coupelle 80 et avec la première pièce 70 pour retenir la coupelle 80 dans le premier orifice traversant 74.

Dans l'exemple illustré sur la figure 3, la coupelle 80 comporte une première gorge annulaire 98 formée dans la surface latérale externe 90 de la coupelle, et l'organe de blocage amovible est un jonc d'arrêt 96 engagé dans la première gorge annulaire 98. Plus précisément, une portion annulaire radialement interne du jonc d'arrêt 96 est logée dans la première gorge annulaire 98 tandis qu'une portion annulaire radialement externe du jonc d'arrêt 96 fait saillie hors de la première gorge annulaire de manière à constituer une butée vis-à-vis du pourtour du premier orifice traversant 74, empêchant un déplacement de la coupelle 80 dans la direction allant de la deuxième pièce 72 vers la première pièce 70. Dans l'exemple illustré, la butée formée par le jonc d'arrêt 96 n'est pas active dans la position de serrage des deux pièces visible sur la figure 3, mais permet néanmoins d'éviter que la coupelle 80 ne se dissocie de la première pièce 70 au cours des opérations d'assemblage des deux pièces 70 et 72.

Dans le premier mode de réalisation préféré de l'invention, la deuxième pièce 72 présente une surface de contact 100 appliquée contre la première pièce 70, le deuxième orifice traversant 76 comporte une partie élargie 102 débouchant au travers de la surface de contact 100, et une partie 104 de la coupelle 80 s'étend axialement dans la partie élargie 102 du deuxième orifice traversant.

Dans ce premier mode de réalisation, la coupelle 80 est ainsi partiellement logée dans le deuxième orifice traversant 76 de la deuxième pièce 72.

L'assemblage selon le premier mode de réalisation préféré de l'invention peut être réalisé au moyen des étapes consistant successivement à :
- mettre en place la coupelle 80 dans le premier orifice traversant 74 de la première pièce 70 ; dans l'exemple illustré, cette étape comprend l'insertion du rebord annulaire 92 dans le lamage 95 ;
- activer le dispositif d'arrêt axial 96 ; dans l'exemple illustré, cette étape comprend l'insertion de la portion annulaire radialement interne du jonc d'arrêt 96 dans la première gorge annulaire 98; cette étape facultative permet de rendre la coupelle 80 « imperdable », c'est-à-dire d'éviter son détachement intempestif au cours de l'étape suivante ;
- mettre en place la deuxième pièce 72, le cas échéant munie des moyens taraudés 20, de sorte que la surface de contact 100 de la deuxième pièce 72 soit appliquée contre la première pièce 70 et que le deuxième orifice traversant 76 soit situé en regard du premier orifice traversant 74 ;
- activer la coopération du corps 19 du moyen de fixation 18 avec la deuxième pièce 72 jusqu'à l'application d'une contrainte de compression entre les pièces 70 et 72 et l'obtention du serrage des deux pièces 70, 72 ; dans l'exemple illustré, il s'agit de visser la vis 18 dans les moyens taraudés 20 en la faisant passer au travers du premier orifice traversant 74.

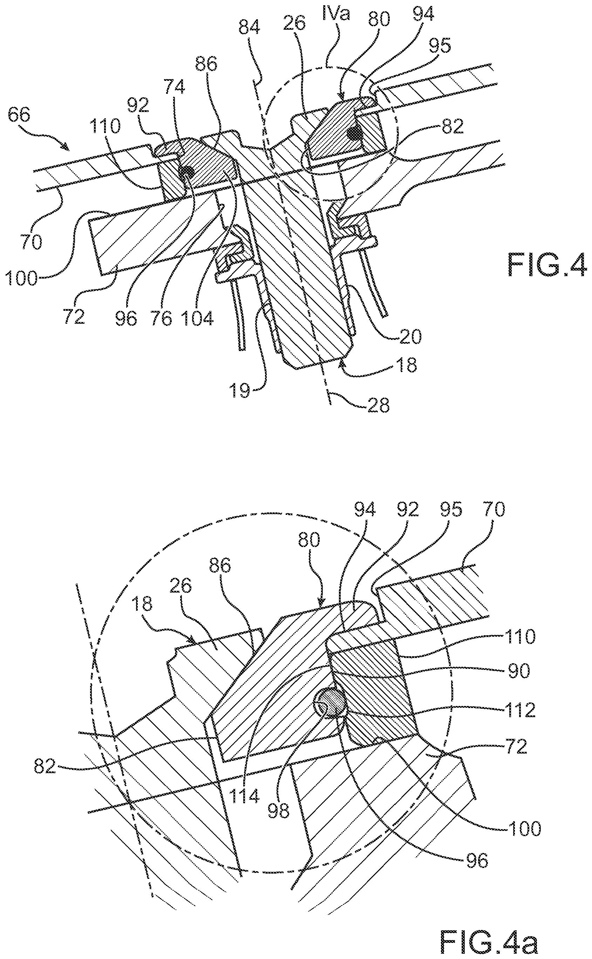

Dans le deuxième mode de réalisation préféré de l'invention visible sur la figure 4, l'assemblage 66 comprend en outre une entretoise 110 interposée entre la première pièce 70 et la deuxième pièce 72. L'entretoise 110 entoure une partie de la coupelle 80. Plus précisément, l'entretoise 110 a sensiblement la forme d'un anneau, ou d'un cylindre de révolution, monté ajusté autour de la surface latérale externe 90 de la coupelle.

Dans l'exemple illustré sur la figure 4, l'assemblage comprend un dispositif d'arrêt axial comportant un organe de blocage amovible, par exemple un jonc d'arrêt 96 du même type que celui du premier mode de réalisation décrit ci-dessus, et la coupelle 80 comporte une première gorge annulaire 98 formée dans la surface latérale externe 90. De plus, l'entretoise 110 comporte une deuxième gorge annulaire 112 formée dans une surface radialement interne 114 de l'entretoise (figure 4a). L'organe de blocage amovible 96 comporte une portion annulaire radialement interne engagée dans la première gorge annulaire 98 et une portion annulaire radialement externe engagée dans la deuxième gorge annulaire 112, de sorte que l'entretoise 110 et la coupelle 80 se retiennent mutuellement à la première pièce 70.

L'assemblage selon le deuxième mode de réalisation préféré de l'invention peut être réalisé au moyen des étapes consistant successivement à :
- mettre en place la coupelle 80 dans le premier orifice traversant 74 de la première pièce 70 ; dans l'exemple illustré sur la figure 4, cette étape comprend l'insertion du rebord annulaire 92 dans le lamage 95 ;
- activer le dispositif d'arrêt axial 96 ; dans l'exemple illustré, cette étape comprend l'insertion de la portion annulaire radialement interne du jonc d'arrêt 96 dans la première gorge annulaire 98 correspondante ; cette étape facultative permet de rendre la coupelle 80 « imperdable », c'est-à-dire d'éviter son détachement intempestif au cours des deux étapes suivantes ;
- monter l'entretoise 110 autour de la surface latérale externe 90 de la coupelle 80 de sorte que l'entretoise 110 soit appliquée contre la première pièce 70 ; dans l'exemple illustré, cette étape comprend l'insertion à force de la portion annulaire radialement externe du jonc d'arrêt 96 dans la deuxième gorge annulaire 112, de manière à garantir la retenue de l'entretoise 110 à la première pièce 70; cette étape facultative permet ainsi de rendre l'entretoise 110 « imperdable », c'est-à-dire d'éviter son détachement intempestif au cours de l'étape suivante ;
- mettre en place la deuxième pièce 72, le cas échéant munie des moyens taraudés 20, de sorte que sa surface de contact 100 soit appliquée contre l'entretoise 110 et que le deuxième orifice traversant 76 soit situé en regard du premier orifice traversant 74 ;
- activer la coopération du corps 19 du moyen de fixation 18 avec la deuxième pièce 72 jusqu'à l'application d'une contrainte de compression entre les pièces 70 et 72 et l'obtention du serrage des deux pièces 70, 72 ; dans l'exemple illustré, il s'agit de visser la vis 18 dans les moyens taraudés 20 en la faisant passer au travers du premier orifice traversant 74.

L'invention a été décrite dans le cas d'une fixation par vissage d'un moyen de fixation prenant la forme d'une vis. Dans le cas d'un assemblage mettant en oeuvre un rivet, une partie d'extrémité du corps du rivet est apte à s'élargir radialement vers l'extérieur par rapport au premier axe. Cette partie d'extrémité élargie est destinée à être appliquée contre la deuxième pièce et à coopérer avec celle-ci, tout en exerçant une contrainte de compression entre les première et deuxième pièces jusqu'à l'obtention du serrage de ces dernières.

## Revendications

1. Assemblage (66), en particulier pour une machine telle qu'une turbomachine d'aéronef, comprenant :
- une première pièce (70) pourvue d'un premier orifice traversant (74) ;
- une deuxième pièce (72) pourvue d'un deuxième orifice traversant (76) positionné en regard du premier orifice traversant (74) de la première pièce ; et
- un moyen de fixation (18) qui s'étend au travers desdits premier et deuxième orifices traversants (74, 76), et qui présente une tête (26) en forme de tête fraisée exerçant un appui sur la première pièce (70) et un corps (19) coopérant avec la deuxième pièce de sorte que le moyen de fixation (18) assure une fixation de la deuxième pièce sur la première pièce ;
ledit assemblage étant **caractérisé en ce qu'**il comprend une coupelle (80), indépendante des première et deuxième pièces (70, 72) et du moyen de fixation (18), la coupelle (80) étant montée dans le premier orifice traversant (74) et comprenant :
- un premier axe (28), défini par rapport à la deuxième pièce (72), pour le positionnement du moyen de fixation (18),
- un orifice de coupelle (82) dans lequel est logée la tête (26) du moyen de fixation et au travers duquel s'étend le corps (19) du moyen de fixation (18),
- une surface d'appui (86) en forme de fraisure, s'étendant dans le premier orifice traversant (74) et dans le deuxième orifice traversant (76), et sur laquelle la tête (26) du moyen de fixation (18) est appliquée, et
- des moyens de butée (92) appliqués sur un pourtour (94) du premier orifice traversant (74) pour empêcher un déplacement de la coupelle (80) en direction de la deuxième pièce (72),
dans lequel :
- ledit orifice de coupelle définit un deuxième axe (84),
- la surface d'appui (86) est configurée pour centrer la tête (26) du moyen de fixation par rapport audit deuxième axe (84),
- la première pièce (70) présente un lamage (95) présentant un fond formant le pourtour (94) du premier orifice traversant (74), et
- la coupelle (80) comprend une surface latérale externe (90) de forme cylindrique de révolution, montée ajustée dans ledit premier orifice traversant (74) de sorte que lesdits premier et deuxième axes (28, 84) soient confondus.

2. Assemblage selon la revendication 1, dans lequel le moyen de fixation (18) est une vis, et la deuxième pièce (72) est pourvue de moyens taraudés (20) définissant ledit premier axe (28).

3. Assemblage selon la revendication 1 ou 2, dans lequel lesdits moyens de butée prennent la forme d'un rebord annulaire (92) s'étendant autour de la coupelle (80) en saillie vers l'extérieur de celle-ci.

4. Assemblage selon l'une quelconque des revendications 1 à 3, comprenant en outre un dispositif d'arrêt axial (96), coopérant avec la coupelle (80) et avec la première pièce (70) pour retenir la coupelle dans le premier orifice traversant (74).

5. Assemblage selon la revendication 4, dans lequel la coupelle (80) comporte une première gorge annulaire (98), et ledit dispositif d'arrêt axial comprend un organe de blocage amovible (96) engagé dans ladite première gorge annulaire.

6. Assemblage selon l'une quelconque des revendications 1 à 5, dans lequel :
- la deuxième pièce (72) présente une surface de contact (100) appliquée contre la première pièce (70),
- le deuxième orifice traversant (76) comporte une partie élargie (102) débouchant au travers de ladite surface de contact (100),
- une partie (104) de la coupelle (80) s'étend axialement dans ladite partie élargie (102) du deuxième orifice traversant.

7. Assemblage selon l'une quelconque des revendications 1 à 5, comprenant en outre une entretoise (110) interposée entre lesdites première et deuxième pièces (70, 72) et entourant une partie de la coupelle (80).

8. Assemblage selon la combinaison des revendications 5 et 7, dans lequel l'entretoise (110) comporte une deuxième gorge annulaire (112) dans laquelle ledit organe de blocage amovible (96) est partiellement engagé, de sorte que l'entretoise (110) et la coupelle (80) se retiennent mutuellement à la première pièce (70).

9. Machine, en particulier turbomachine, comprenant au moins un assemblage selon l'une quelconque des revendications 1 à 8, dans lequel l'une des première et deuxième pièces (70) constitue au moins une partie d'une paroi annulaire (52, 54) délimitant un canal d'écoulement de flux (56, 48) de la machine, et l'autre des première et deuxième pièces (72) constitue au moins une partie d'un carter structural (60) de la machine ou une partie d'un conduit pour la circulation d'un fluide.

10. Procédé de réalisation d'un assemblage (66) selon l'une quelconque des revendications 1 à 8, comprenant les étapes consistant successivement à :
- mettre en place la coupelle (80) dans le premier orifice traversant (74) de la première pièce (70) ;
- mettre en place la deuxième pièce (72), de sorte que le deuxième orifice traversant (76) soit situé en regard du premier orifice traversant (74) ;
- mettre en place le moyen de fixation (18) au travers des premier et deuxième orifices traversants (74, 76), jusqu'à l'application d'une contrainte de compression entre les première et deuxième pièces (70, 72) et l'obtention du serrage de la première pièce (70) et de la deuxième pièce (72), du fait d'un appui exercé par la tête (26) du moyen de fixation (18) sur la première pièce (70) et du fait d'une coopération du corps (19) du moyen de fixation (18) avec la deuxième pièce (72).

11. Procédé selon la revendication précédente, comprenant en outre une étape consistant à activer le dispositif d'arrêt axial (96), de sorte que ledit dispositif coopère avec la coupelle (80) et avec la première pièce (70) pour retenir la coupelle dans le premier orifice traversant (74).

## Patentansprüche

1. Anordnung (66), insbesondere für eine Maschine wie beispielsweise ein Flugzeug-Turbotriebwerk, bestehend aus:
- einem ersten Teil (70), das mit einer ersten durchgehenden Öffnung (74) versehen ist;
- einem zweiten Teil (72), das mit einer zweiten durchgehenden Öffnung (76) versehen ist, die gegenüber der ersten durchgehenden Öffnung (74) des ersten Teils angeordnet ist; und
- einem Befestigungsmittel (18), das sich durch die genannte erste und zweite durchgehende Öffnung (74, 76) erstreckt, und das einen Kopf (26) in der Form eines Senkkopfs aufweist, der einen Andruck auf das erste Teil (70) ausübt, und einen Körper (19) aufweist, der mit dem zweiten Teil zusammenwirkt, dergestalt, dass das Befestigungsmittel (18) die Befestigung des zweiten Teils an dem ersten Teil gewährleistet;
**dadurch gekennzeichnet,**
**dass** sie einen Sitz (80) enthält, der unabhängig von dem ersten und dem zweiten Teil (70, 72) und von dem Befestigungsmittel (18) ist, wobei der Sitz (80) in der ersten durchgehenden Öffnung (74) eingebaut ist und aufweist:
- eine erste Achse (28), die in Bezug auf das zweite Teil (72) definiert ist, und zwar für die Positionierung des Befestigungsmittels (18);
- eine Sitzöffnung (82), in der der Kopf (26) des Befestigungsmittels Aufnahme findet und durch die sich der Körper (19) des Befestigungsmittels (18) erstreckt,
- eine Anlagefläche (86) in Form einer Ausfräsung, die sich in der ersten durchgehenden Öffnung (74) und in der zweiten durchgehenden Öffnung (76) erstreckt, und an der der Kopf (26) des Befestigungsmittels (18) angelegt wird, und
- Anschlagmittel (92), die auf einem Rand (94) der ersten durchgehenden Öffnung (74) angebracht sind, um ein Verschieben des Sitzes (80) in Richtung des zweiten Teils (72) zu verhindern,
wobei:
- die genannte Sitzöffnung eine zweite Achse (84) definiert,
- die Anlagefläche (86) dazu gestaltet ist, den Kopf (26) des Befestigungsmittels bezogen auf die zweite Achse (84) zu zentrieren,
- das erste Teil (70) eine Flachsenkung (95) mit einem Boden aufweist, der den Rand (94) der ersten durchgehenden Öffnung (74) bildet, und
- der Sitz (80) eine Außenseitenfläche (90) von umlaufender zylindrischer Form aufweist, die in der genannten ersten durchgehenden Öffnung (74) dergestalt ausgerichtet angebracht ist, dass die genannten Achsen (28, 84) aufeinander liegen.

2. Anordnung nach Anspruch 1, bei der das Befestigungsmittel (18) eine Schraube ist, und das zweite Teil (72) mit Mitteln mit Innengewinde (20) versehen ist, die die genannte erste Achse (28) definieren.

3. Anordnung nach Anspruch 1 oder 2, bei der die genannten Anschlagmittel die Form eines ringförmigen Randes (92) annehmen, der sich um den Sitz (80) herum nach außerhalb von diesem erstreckt.

4. Anordnung nach einem der Ansprüche 1 bis 3, welche ferner eine axiale Sperrvorrichtung (96) enthält, die mit dem Sitz (80) und mit dem ersten Teil (70) zusammenwirkt, um den Sitz in der ersten durchgehenden Öffnung (74) festzuhalten.

5. Anordnung nach Anspruch 4, bei der der Sitz (80) eine erste ringförmige Auskehlung (98) aufweist, und die genannte axiale Sperrvorrichtung ein abnehmbares Blockierorgan (96) umfasst, das sich in dieser ersten ringförmigen Auskehlung in Eingriff befindet.

6. Anordnung nach einem der Ansprüche 1 bis 5, bei der
- das zweite Teil (72) eine Kontaktfläche (100) aufweist, die an das erste Teil (70) angelegt wird,
- die zweite durchgehende Öffnung (76) einen erweiterten Teil (102) aufweist, der durch die genannte Kontaktfläche (100) hindurch mündet,
- ein Teil (104) des Sitzes (80) sich axial in den genannten erweiterten Teil (102) der zweiten durchgehenden Öffnung erstreckt.

7. Anordnung nach einem der Ansprüche 1 bis 5, die ferner ein Zwischenstück (110) umfasst, das zwischen dem genannten ersten und genannten zweiten Teil (70, 72) angeordnet ist und einen Teil des Sitzes (80) umgibt.

8. Anordnung nach Anspruch 5 und 7 in Kombination, bei der das Zwischenstück (110) eine zweite ringförmige Auskehlung (112) aufweist, in der sich das abnehmbare Blockierorgan (96) teilweise in Eingriff befindet, so dass das Zwischenstück (110) und der Sitz (80) sich gegenseitig an dem ersten Teil (70) festhalten.

9. Maschine, insbesondere Turbotriebwerk, das mindestens eine Anordnung nach einem der Ansprüche 1 bis 8 aufweist, wobei eines der beiden Teile (70) zumindest einen Teil einer ringförmigen Wand (52, 54) bildet, die einen Strömungskanal von Strömen (56, 48) der Maschine abgrenzt, und das andere der beiden Teile (72) zumindest einen Teil eines Rahmengehäuses (60) der Maschine oder einen Teil einer Leitung für die Zirkulation eines Fluids bildet.

10. Verfahren zur Fertigung einer Anordnung (66) nach einem der Ansprüche 1 bis 8, das die Verfahrensschritte umfasst, die drin bestehen, dass nacheinander :
- der Sitz (80) in der ersten durchgehenden Öffnung (74) des ersten Teils (70) eingesetzt wird;
- das zweite Teil (72) eingesetzt wird, so dass die zweite durchgehende Öffnung (76) gegenüber der ersten durchgehenden Öffnung (74) angeordnet ist;
- das Befestigungsmittel (18) durch die erste und die zweite durchgehende Öffnung (74, 76) hindurch eingesetzt wird, bis zum Anliegen einer zusammendrückenden Kraft zwischen dem ersten und dem zweiten Teil (70, 72) und dem Erreichen der Klemmverbindung zwischen dem ersten Teil (70) und dem zweiten Teil (72) aufgrund eines Drucks, der durch den Kopf (26) des Befestigungsmittels (18) auf das erste Teil (70) ausgeübt wird, und aufgrund eines Zusammenwirkens des Körpers (19) des Befestigungsmittels (18) mit dem zweiten Teil (72).

11. Verfahren nach dem vorherigen Anspruch, das ferner einen Verfahrensschritt umfasst, der drin besteht, die axiale Sperrvorrichtung (96) zu aktivieren, so dass diese Vorrichtung mit dem Sitz (80) und mit dem ersten Teil (70) zusammenwirkt, um den Sitz in der ersten durchgehenden Öffnung (74) festzuhalten.

## Claims

1. Assembly (66), particularly for a machine such as an aircraft turbine machine, comprising:
- a first part (70) with a first through orifice (74);
- a second part (72) with a second through orifice (76) facing the first through orifice (74) in the first part; and
- an attachment means (18) that passes through said first and second through orifices (74, 76), and that has a head (26) in the shape of a countersunk head that bears on the first part (70) and a body (19) cooperating with the second part so that the attachment means (18) fix the second part on the first part;
said assembly being **characterised in that** it comprises a seat (80) independent of the first and second parts (70, 72) and the attachment means (18), the seat (80) being mounted in the first through orifice (74) and comprising:
- a first axis (28), defined relative to the second part (72), for positioning the attachment means (18),
- a seat orifice (82) in which the head (26) of the attachment means is housed and through which the body (19) of the attachment means (18) extends,
- a countersunk bearing surface (86) extending in the first through orifice (74) and in the second through orifice (76), and onto which the head (26) of the attachment means (18) is applied, and
- abutment means (92) applied on a periphery (94) of the first through orifice (74) to prevent a displacement of the seat (80) towards the second part (72),
wherein:
- said seat orifice defines a second axis (84),
- the bearing surface (86) is configured to centre the head (26) of the attachment means relative to said second axis (84),
- the first part (70) is spot faced, a bottom of the spot facing (95) forming the periphery (94) of the first through orifice (74), and
- the seat (80) comprises an outer lateral surface (90) in the shape of a cylinder of revolution, installed to fit in said first through orifice (74) such that said first and second axes (28, 84) are coincident.

2. Assembly according to claim 1, in which the attachment means (18) is a screw, and the second part (72) is provided with threaded means (20) defining said first axis (28).

3. Assembly according to claim 1 or 2, in which said abutment means are in the form of an annular rim (92) extending around the seat (80), projecting radially outwards from it.

4. Assembly according to any one of claims 1 to 3, also comprising an axial stop device (96) cooperating with the seat (80) and with the first part (70) to retain the seat in the first through orifice (74).

5. Assembly according to claim 4 in which the seat (80) comprises a first annular groove (98), and the axial stop device comprises a removable locking device (96) engaged in said first annular groove.

6. Assembly according to any one of claims 1 to 5, in which:
- the second part (72) has a contact surface (100) applied in contact with the first part (70),
- the said second through orifice (76) comprises a widened part (102) opening up through contact surface (100),
- a part (104) of the seat (80) extends axially in said widened part (102) of the second through orifice,

7. Assembly according to any one of claims 1 to 5, also comprising a spacer (110) inserted between said first and second parts (70, 72) and surrounding part of the seat (80).

8. Assembly according to the combination of claims 5 and 7, in which the spacer (110) comprises a second annular groove (112) in which said removable locking device (96) is partially engaged, such that the spacer (110) and the seat (80) mutually retain each other to the first part (70).

9. Machine, particularly a turbine machine, comprising a least one assembly according to any one of claims 1 to 8, in which either the first or the second part (70) forms at least part of an annular wall (52, 54) delimiting a flow channel (56, 48) of the machine, and the other of the first and second parts (72) forms at least part of a structural case (60) of the machine or a part of a conduit for the circulation of a fluid.

10. Method of making an assembly (66) according to any one of claims 1 to 8, comprising the following successive steps:
- put the seat (80) into place in the first through orifice (74) of the first part (70);
- put the second part (72) into place, such that the second through orifice (76) is positioned facing the first through orifice (74);
- put the attachment means (18) into place through the first and second through orifices (74, 76), until a compression stress is applied between the first and the second parts (70, 72) and the first part (70) and the second part (72) are clamped to each other, due to pressure applied by the head (26) of the attachment means (18) on the first part (70) and due to cooperation between the body (19) of the attachment means (18) and the second part (72).

11. Method according to the previous claim, also comprising a step consisting of activating an axial stop device (96) such that said device cooperates with the seat (80) and with the first part (70) to retain the seat in the first through orifice (74).
